# EUROPEAN PATENT APPLICATION

(11) **EP 1 503 547 A1**
(43) Date of publication of application: **02.02.2005**
(21) Application number: 03730573.7
(22) Date of filing: 22.05.2003
(51) Int. Cl.: H04L 12/46, H04L 12/56, H04L 12/66

(54) **INFORMATION PROCESSING SYSTEM**

(30) Priority: 23.05.2002 JP 2002148705
(71) Applicant: Matsushita Electric Industrial Co., Ltd., Kadoma City, Osaka 571-8501 (JP)
(72) Inventor: MAEKAWA, Hajime, Osaka-shi, Osaka 547-0005 (JP); IWAMOTO, Koji, Nara-shi, Nara 631-0034 (JP); IKEDA, Takumi, Kobe-shi, Hyogo 651-0053 (JP); TAKECHI, Hideaki, Toyonaka-shi, Osaka 560-0012 (JP); HIROSE, Koji, Hirakata-shi, Osaka 573-1122 (JP)
(74) Representative: Balsters, Robert
(86) International application number: PCT/JP2003/006387
(87) International publication number: WO 2003/101048

(57) **Abstract**

In an information processing system having an electronic device and a server device, the electronic device transmits information having a GIP to the server device, and the server device configures retuned information having a GIP, and transmits it to the electronic device. The electronic device receives and sets the GIP. Thus, the GIP setting of the electronic device can be performed automatically, thereby facilitating to access the electronic device from an external device via the Internet.

## Description

### TECHNICAL FIELD

The present invention relates to an electronic device whose IP address can be set automatically.

### BACKGROUND ART

In recent years, as the Internet has been developed and come into widespread use, more and more electronic devices including computers have been connected with the Internet, allowing users to access electronic devices anywhere in the world from anywhere in the world. In order to perform communication between electronic devices in the world, according to the Internet Protocol (IP), every electronic device is assigned a unique address which is called an IP address (global IP address) on the network. Currently prevailing IP addresses are represented by 32-bit numbers. The version of IP using 32-bit IP addresses is version 4 (IPv4). However, when a larger number of electronic devices in the world have been connected with the Internet, 32 bits will be insufficient to assign addresses. Therefore, the IP is expected to update from IPv4 to IP version 6 (IPv6) in which 128-bit IP addresses are used.

In spite of such a situation, the setting of IP addresses of electronic devices is usually performed manually.

On the other hand, for the purpose of connecting a domestic electronic device with the Internet, a router or the like is used. In the Internet (hereinafter referred to as "WAN") a global IP address is used, whereas in the domestic network (hereinafter referred to as "LAN") a private IP address is used. Since it is not a unique address, a private IP address cannot be used as it is for information communication via the Internet. To solve this problem, a router or the like is provided with a network address translation function (NAT). The NAT is a technique for enabling an electronic device assigned a private IP address in the "WAN" to perform information communication over the Internet. Specifically, the NAT is a function to achieve information communication via the Internet by changing the value of a source IP address (hereinafter referred to as "SA") contained in the information (called a packet) to be transmitted by an electronic device from the private IP address of the electronic device to the global IP address of the router or the like. The global IP address of the router or the like is usually assigned dynamically by the server device of an Internet Service Provider (ISP). Protocols for dynamically assigning global IP addresses include PPPoE, PPPoA and DHCP.

However, in the conventional art, it is difficult to access an electronic device not assigned a global IP address such as a domestic electronic device from an external device via the Internet. This is because the global IP address of the router or the like is changed dynamically. The changing rule depends on how the server device of the ISP is installed, so that it is difficult to predict a global IP address to be assigned to the router or the like. In addition, determining the global IP address assigned to the domestic electronic device requires the user to acquire the global IP address of the router or the like manually; however, since the global IP address of the router or the like changes dynamically, it is difficult to create a condition that the domestic electronic device is always informed of the latest global IP address of the router or the like.

### SUMMARY OF THE INVENTION

In order to solve the aforementioned problems, the present invention is an information processing system having an electronic device and a server device, wherein
the electronic device includes:
a server identifier storage part which stores a server identifier for identifying the server device;
a global IP address storage part which stores a global IP address;
an information transmission part which transmits information having the global IP address stored in the global IP address storage part to the server device;
an information reception part which receives returned information having a global IP address from the server device;
an IP address acquisition part which acquires the global IP address from the returned information that the information reception part has received; and
an IP address setting part which sets the global IP address that the IP address acquisition part has acquired, and
the server device includes:
an information reception part which receives the information having a global IP address from the electronic device; and
an information transmission part which transmits the returned information having the global IP address that the information reception part has received to the electronic device.

This information processing system makes it possible to automatically set a global IP address in the electronic device, thereby facilitating to access an electronic device not assigned a global IP address such as an electronic device from an external device via the Internet.

### BRIEF DESCRIPTION OF THE DRAWINGS

Fig. 1 is a conceptual diagram of an information processing system according to a first embodiment of the present invention.
Fig. 2 is a block diagram of the information processing system according to the first embodiment of the present invention.
Fig. 3 is a flowchart depicting the behavior of a first electronic device according to the first embodiment of the present invention.
Fig. 4 is a flowchart depicting the behavior of a second electronic device according to the first embodiment of the present invention.
Fig. 5 is a flowchart depicting the behavior of a server device according to the first embodiment of the present invention.
Fig. 6 is a block diagram of a specific information processing system according to the first embodiment of the present invention.
Fig. 7 is a block diagram of the information processing system according to a second embodiment of the present invention.
Fig. 8 is a flowchart depicting the behavior of a first electronic device according to the second embodiment of the present invention.
Fig. 9 is a flowchart depicting the behavior of a server device according to the second embodiment of the present invention.
Figs. 10, 11 and 12 are block diagrams of a specific information processing system according to the second embodiment of the present invention.

### DETAILED DESCRIPTION OF PREFERRED EMBODIMENTS

Embodiments of the present invention will be described in detail as follows, with reference to accompanying drawings. In the following embodiments, components or steps in flowcharts that are referred to with the same reference numerals have the same function as each other, so that their description may not be repeated.

### (First Embodiment)

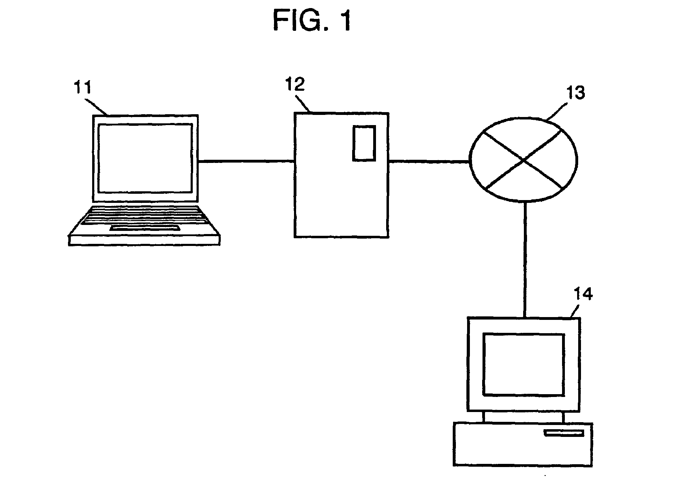

Fig. 1 is a conceptual diagram of an information processing system according to the present embodiment. The information processing system includes first electronic device 11, second electronic device 12, internet 13 and server device 14. First electronic device 11 cannot have a global IP address, and is given a local IP address from second electronic device 12 so as to be connected with internet 13. First electronic device 11 can be a computer, a microwave oven, a telephone, a printer, a facsimile, a refrigerator, a TV set, a set top box or the like. First electronic device 11 transmits information to server device 14 via second electronic device 12, receives a global IP address from server device 14 via second electronic device 12, and automatically sets the global IP address. The term "global IP address" used in this specification is an address (information) for allowing an external device (connected with the Internet) to communicate with an electronic device, and may be an address of another type as long as it is an address (information) for implementing such a function. For example, when a plurality of "LANs" using private IPs are connected with each other by using a router having the NAT function, the address of the "LAN" on the side on which the server of the router is placed can be read as the global IP address. It goes without saying that the terms "IP address", "global IP address" and "local IP address" used in this specification have the aforementioned broad concept, and include not only what is called IPVer4 addresses currently used, but also addresses of other versions such as IPVer6.

Second electronic device 12 here has a function of connecting first electronic device 11 and internet 13, and specifically has a route control function or a network address translation (NAT) function. Second electronic device 12 is, e.g. an electronic device called a router, and has a global IP address. In other words, second electronic device 12 has a function of connecting first electronic device 11 capable of only having a private IP address with the internet.

Server device 14 is connected with internet 13. When receiving information from first electronic device 11 via second electronic device 12, server device 14 transmits information having the global IP address given by second electronic device 12 to first electronic device 11.

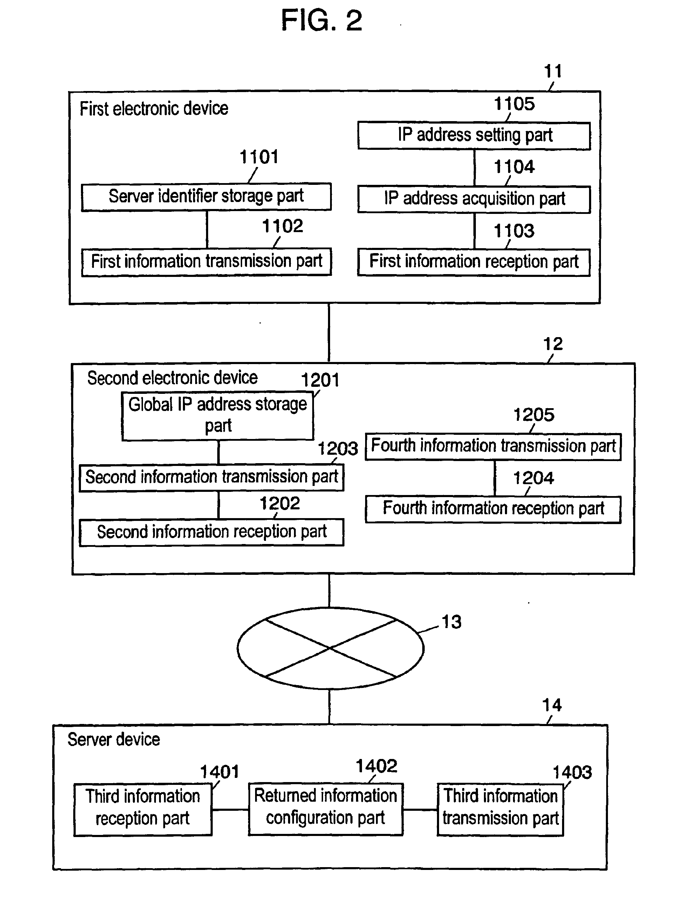

Fig. 2 shows a block diagram of the information processing system according to the present embodiment. First electronic device 11 includes server identifier storage part 1101, first information transmission part 1102, first information reception part 1103, IP address acquisition part 1104 and IP address setting part 1105. Second electronic device 12 includes global IP address storage part 1201, second information reception part 1202, second information transmission part 1203, fourth information reception part 1204 and fourth information transmission part 1205. Server device 14 includes third information reception part 1401, returned information configuration part 1402 and third information transmission part 1403.

Server identifier storage part 1101 stores a server identifier for identifying server device 14. Server identifier storage part 1101 can be implemented by a nonvolatile or volatile recording medium.

First information transmission part 1102 transmits information to server device 14 identified by the server identifier via second electronic device 12. First information transmission part 1102 can be implemented by a wireless or wire communication means.

First information reception part 1103 receives returned information having a global IP address from second electronic device 12. First information reception part 1103 can be implemented by a wireless or wire communication means. In general, first information transmission part 1102 and first information reception part 1103 are physically the same.

IP address acquisition part 1104 acquires the global IP address from the returned information that first information reception part 1103 has received. IP address acquisition part 1104 can be generally implemented by software, but may be implemented by hardware (a dedicated circuit).

IP address setting part 1105 sets the global IP address that IP address acquisition part 1104 has acquired. The global IP address thus set is notified to an other electronic device such as a portable phone. The global IP address is the information necessary for the other electronic device to communicate with first electronic device 11 via the internet. The aforementioned setting means a process of writing the global IP address to an appropriate site (which may be called a registry, property or attribute). IP address setting part 1105 can be generally implemented by software, but may be implemented by hardware (a dedicated circuit).

Global IP address storage part 1201 stores a global IP address. Global IP address storage part 1201 can be implemented by a nonvolatile or volatile recording medium. The global IP address of global IP address storage part 1201 is generally transmitted from an external device, and generally changes dynamically. The term "external device" means an electronic device which is other than second electronic device 12 and which second electronic device 12 can generally be connected with via a network such as the Internet. The external device used in this specification has thus a wide concept.

Second information reception part 1202 receives information from first electronic device 11. Second information reception part 1202 can be implemented by a wireless or wire communication means.

Second information transmission part 1203 transmits the information that second information reception part 1202 has received and the global IP address to server device 14. Second information transmission part 1203 can be implemented by a wireless or wire communication means.

Fourth information reception part 1204 receives returned information, which is information having the global IP address, from server device 14. Fourth information reception part 1204 can be implemented by a wireless or wire communication means.

Fourth information transmission part 1205 transmits the returned information that fourth information reception part 1204 has received to first electronic device 11. Fourth information transmission part 1205 can be implemented by a wireless or wire communication means. Second information reception part 1202, second information transmission part 1203, fourth information reception part 1204 and fourth information transmission part 1205 are generally implemented by physically the same means.

Third information reception part 1401 receives information and a global IP address from second electronic device 12. Third information reception part 1401 can be implemented by a wireless or wire communication means.

Returned information configuration part 1402 configures returned information, which is information having a global IP address, based on the information and global IP address that third information reception part 1401 has received. Returned information configuration part 1402 can be generally implemented by software, but may be implemented by hardware (a dedicated circuit).

Third information transmission part 1403 transmits the returned information that returned information configuration part 1402 has configured to second electronic device 12. Third information transmission part 1403 can be implemented by a wireless or wire communication means. Third information reception part 1401 and third information transmission part 1403 are generally implemented by physically the same means.

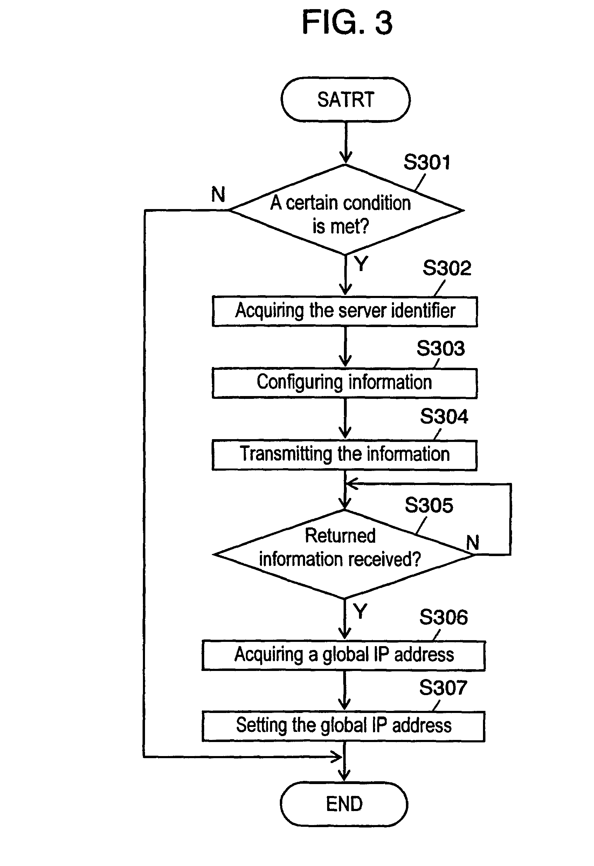

The following is a description of the behavior of this information processing system. The behavior of first electronic device 11 will be described using the flowchart shown in Fig. 3.

(Step S301) First information transmission part 1102 determines whether a condition to transmit information to server device 14 is met or not in order to set a global address. The condition can be various kinds, which will be described later.

(Step S302) First information transmission part 1102 acquires the server identifier from server identifier storage part 1101.

(Step S303) First information transmission part 1102 configures information to be transmitted. The information has a destination field indicating the receiver of the information, and the configuration and contents of the other parts of the information can be anything as long as the destination field has the server identifier. The main part of the information (excluding the destination field and the like) can be empty information (dummy information).

(Step S304) First information transmission part 1102 transmits information that has been configured at Step S303 to second electronic device 12.

(Step S305) First information reception part 1103 determines whether returned information has been received or not. When returned information has been received, the process goes to Step S306; otherwise, it goes to Step S305.

(Step S306) IP address acquisition part 1104 takes out the global IP address from the returned information received at Step S305.

(Step S307) IP address setting part 1105 sets the global IP address acquired at Step S306.

In the flowchart shown in Fig. 3, the operation of setting a global IP address is started when a certain condition has been met; however, this operation may be started according to the user's direction.

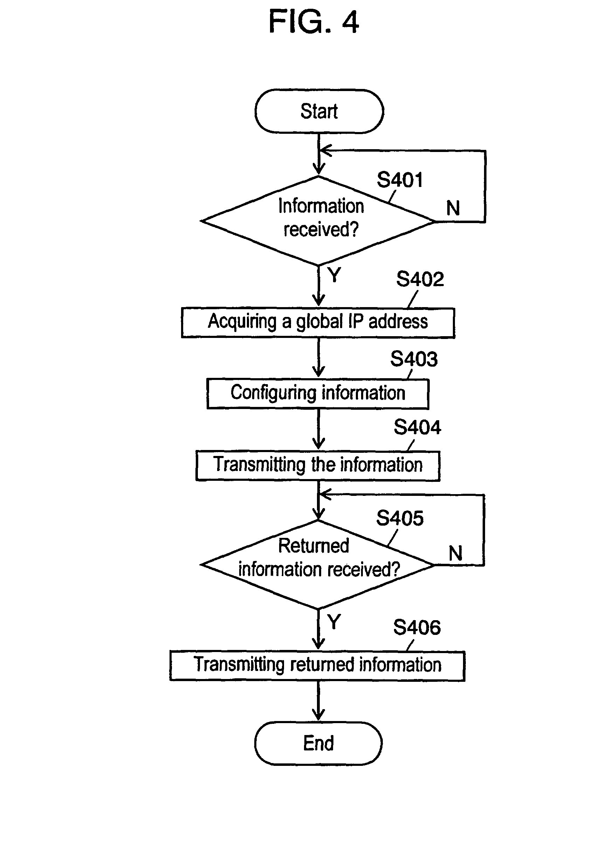

The behavior of second electronic device 12 will be described as follows with reference to the flowchart of Fig. 4.

(Step S401) Second information reception part 1202 determines whether information has been received from first electronic device 11 or not. When information has been received, the process goes to Step S402; otherwise it goes back to Step S401.

(Step S402) Second information transmission part 1203 acquires a global IP address from global IP address storage part 1201.

(Step S403) Second information transmission part 1203 configures information to be transmitted to server device 14, based on the global IP address acquired at Step S402 and the information received at Step S401. The global IP address is set, e.g. in a field (which corresponds to "SA" in the following examples) for identifying the source device in the information to be configured. The configuration of the information to be transmitted to server device 14 can be anything.

(Step S404) Second information transmission part 1203 transmits the information configured at Step S403 to server device 14. The information can be transmitted to server device 14 since the information received at Step S401 contains a server identifier.

(Step S405) Fourth information reception part 1204 determines whether the returned information has been received from server device 14 or not. When the returned information has been received, the process goes to Step S406; otherwise, it returns to Step S405.

(Step S406) Fourth information transmission part 1205 transmits the returned information received at Step S405 to first electronic device 11. The information received at Step S405 and the information to be transmitted at Step S406 are generally different from each other. This is because the information to be transmitted contains information about the route through which the information has passed. However, the information received at Step S405 and the information to be transmitted at Step S406 may be the same. All that is needed is that a global IP address is transmitted to first electronic device 11, and that first electronic device 11 acquires the global IP address.

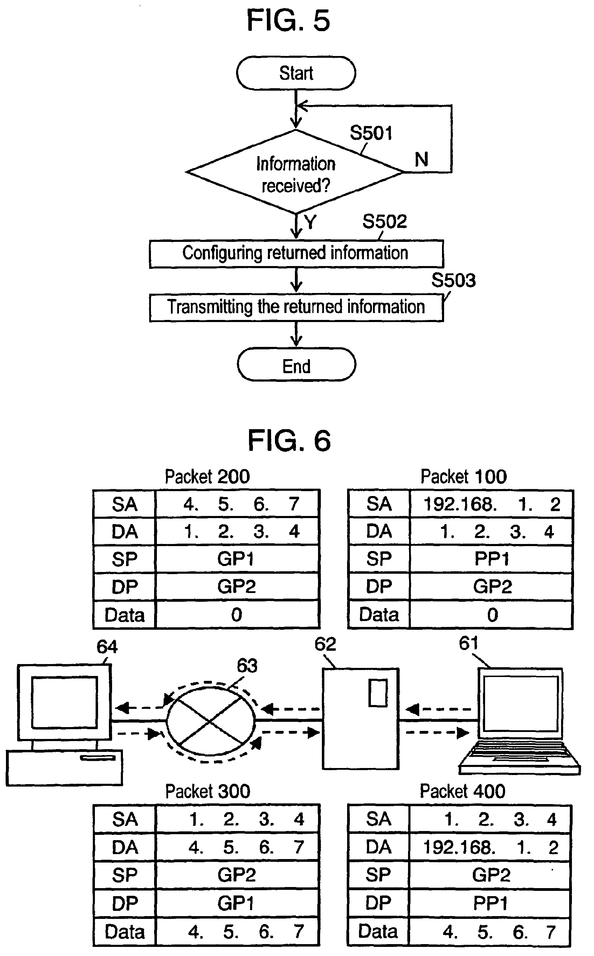

The behavior of server device 14 will be described as follows using the flowchart shown in Fig. 5.

(Step S501) Third information reception part 1401 determines whether information has been received from second electronic device 12 or not. When information has been received, the process goes to Step S502; otherwise it goes back to Step S501.

(Step S502) Returned information configuration part 1402 configures returned information, which is information to be returned, based on the information received at Step S501. In general, a global IP address contained in the header (route information) of the information is taken out and written in the returned information in a format that first electronic device 11 can acquire. As long as first electronic device 11 can acquire the global IP address, the configuration of the returned information does not matter. Therefore, it causes no problem if the information received at Step S501 and the returned information are the same.

(Step S503) Third information transmission part 1403 transmits the returned information configured at Step S502 to first electronic device 11. When transmitted to first electronic device 11, the returned information is transmitted by way of second electronic device 12.

The following is a description of the specific behavior of the information processing system according to the present embodiment.

### (First Example)

A first example is based on the condition that second electronic device 12 always has information about the state of connection with the Internet, that is, the state of communication. In addition, it is assumed that second electronic device 12 becomes unable to communicate due to some accident. It is also assumed that if second electronic device 12 cannot communicate, then first electronic device 11 cannot communicate, either.

When becoming able to communicate again, second electronic device 12 notifies first electronic device 11 that it was temporarily unable to communicate. Then, first electronic device 11 transmits dummy information to server device 14. Next, second electronic device 12 transmits the global IP address of its own together with the dummy information to server device 14. Second electronic device 12 writes the global IP address of its own into the field of the IP address of an electronic device on the transmission route. The dummy information is empty in its main part, but its header contains the information for identifying its source and destination.

Next, server device 14 acquires the global IP address of second electronic device 12 contained in the route information in the received information. Server device 14 then stores the global IP address to the main part of the returned information, and transmits the returned information to first electronic device 11.

Then, second electronic device 12 receives the retuned information and transfers it as it is to first electronic device 11. The phrase "transfer it as it is" means to transfer it without rewriting the main part. In general, header information is rewritten. Next, first electronic device 11 receives the retuned information, and takes out the global IP address from it (the main part). First electronic device 11 writes the global IP address in an appropriate setting site.

In the first example, the timing for the first electronic device to start the operation of setting the global IP address is when a certain condition has been met, and specifically the certain condition is about the state of communication. More specifically, the certain condition is when the second electronic device and also the first electronic device become unable to communicate.

### (Second Example)

A second example is based on the condition that first electronic device 11 starts the operation of acquiring a global IP address when the power gets turned on.

Specifically, first electronic device 11 is booted by turning on the power. Immediately after being booted, first electronic device 11 transmits dummy information to server device 14. The subsequent processes are equal to those described in the first example.

The above description indicates that the certain condition in the second example is when the first electronic device is powered on.

Thus, the timing for the first information transmission part of the first electronic device to transmit information is preferably when the certain condition is met, and the certain condition can be various kinds besides this. For example, the condition can be when a preset date has come or every preset period. It is also possible as described above that the first electronic device performs the process of automatically setting the global IP address based on the user's direction.

### (Third Example)

A third example shows the configuration and example of specific information to be transmitted and received between a first electronic device, a second electronic device and a server device. Fig. 6 shows the structure of the information processing system of the third example, and the information to be transmitted and received in the system. The information to be transmitted and received is generally called a packet. A packet contains a source IP address (hereinafter referred to as "SA"), a destination IP address (hereinafter referred to as "DA"), the port of the device designated by the source IP address (hereinafter referred to as "SP"), the port of the device designated by the destination IP address (hereinafter referred to as "DP") and data (hereinafter referred to as "Data"). The data becomes the main part of information to be transmitted.

The information processing system shown in Fig. 6 includes first electronic device 61, second electronic device 62, internet 63 and server device 64. First electronic device 61 is, e.g. a notebook personal computer and is assigned a private IP address. Second electronic device 62 is, e.g. a router, and is provided with a network address translation function. Second electronic device 62 is assigned a global IP address.

The following is a description of the behavior of the information processing system shown in Fig. 6.

First of all, first electronic device 61 transmits the information of packet 100 shown in Fig. 6 to second electronic device 62. The "SA" of packet 100 is the private IP address of first electronic device 61. The "DA" of packet 100 is the global IP address of server device 64. Thus, first electronic device 61 transmits packet 100 shown in Fig. 6 to server device 64. The "SP" and "DP" of packet 100 indicate the values PP1 and GP2, respectively. The "Data" of packet 100 is empty (0).

Next, second electronic device 62 receives packet 100, and translates the "SA" of packet 100 into the global IP address of second electronic device 62. In short, the "SA" of packet 100 is translated into "4.5.6.7". This process is what is called a network address translation (NAT). Second electronic device 62 has the global IP address "4.5.6.7" of its own, and changes the data in the "SA" and "SP" of packet 100. Packet 200 obtained by the change has a configuration to be transmitted to server device 64, and is transmitted to server device 64.

Server device 64 receives packet 200, and acquires the "SA" of packet 200 and writes the "SA" in the "Data". Thus, the "SA" and "DA" of packet 200 are interchanged with each other to configure packet 300. The "Data" of packet 300 stores "SA: 1.2.3.4". Then, server device 64 transmits packet 300 to second electronic device 62.

Receiving packet 300, second electronic device 62 changes the "DA" of packet 300 from the global IP address of its own to the private IP address of first electronic device 61, thereby configuring packet 400. Packet 400 has "DA" and "DP" different from those of packet 300. Second electronic device 62 transmits packet 400 to first electronic device 61.

Receiving packet 400, first electronic device 61 acquires a global IP address "4.5.6.7" in the "Data" of packet 400, and sets the global IP address thus acquired. The term "set" means to store the global IP address to be used for the communication between first electronic device 61 and an other device to an appropriate site (a registry, property or attribute).

The description hereinbefore shows that there are various approaches for the operation of setting a global IP address to the first electronic device.

The following is a description about the use of a global IP address which has been set in the first electronic device.

For example, the first electronic device transmits the stored global IP address by email or the like to an external device (e.g. a portable terminal) from which the first electronic device wants to be accessed. The portable terminal receives and stores the global IP address of the first electronic device. Hereafter, the portable terminal can access the first electronic device by using the global IP address stored. Accessing the first electronic device from the portable terminal enables the remote setting of the first electronic device. It is also possible to know the condition of the first electronic device from remote locations.

As will be described later in a second embodiment of the present invention, it is possible that first electronic device 61 transmits information to server device 64 periodically. In that case, similar to the third example, first electronic device 61 acquires a global IP address. And first electronic device 61 can set a new global IP address when the acquired global IP address has changed. Only when having acquired a new global IP address, first electronic device 61 transmits the global IP address to an external device such as a portable terminal. The portable terminal or the like acquires and stores the new global IP address of first electronic device 61. Hereafter, the portable terminal or the like can access first electronic device 61 by using the new global IP address.

As described hereinbefore, it is preferable in terms of communication efficiency and other aspects that when the global IP address of first electronic device 61 has changed, the new global IP address be notified to an external device such as a portable terminal.

Thus, according to the first embodiment the first electronic device can automatically know the global IP address of the second electronic device, and the global IP address of the first electronic device can be automatically notified to an external device such as a portable terminal. In addition, it gets easier to access the first electronic device from an external device via the Internet. Consequently, the user can save work, and perform normal communication. The technique in the first embodiment is effective particularly when the internet protocol is updated to IPv6. This is because IPv6 has problems in that (1) the IP address is as long as 128 bits, making it difficult to set it manually, and that (2) since the electronic device is made to automatically generate an IP address, there is no way of knowing the effective IP address automatically generated, except for making the network operator or administrator of the ISP or the like check the program of the device. Thus, the operation of the system is extremely difficult unless having the mechanism of informing the IP address from the device side as in the present embodiment.

Although in the first embodiment only one first electronic device is used, a plurality of electronic devices sharing the same global IP address may be used by connecting with each other.

In the first embodiment the server device configures and transmits returned information; however, the server device may use received information as the returned information, without adding any change. In that case, the second electronic device writes a global IP address into the main part of the information, and the server device receives the information and forwards it as returned information to the second electronic device. The second electronic device receives the returned information and transmits it to the first electronic device. The first electronic device receives the returned information, and acquires and sets the global IP address contained in the main part. In that case, server device 14 does not have returned information configuration part 1402, and only includes third information reception part 1401 for receiving the information and global IP address from second electronic device 12 and third information transmission part 1403 for transmitting to the second electronic device the returned information having the global IP address that the third information reception part has received.

In the present embodiment, the information that the second electronic device receives from the first electronic device and the information that the second electronic device transmits to the server device can be either the same or different from each other. In general, these information are different in the value of the field "SA" indicating the source device.

The behavior of the first electronic device, the second electronic device and the server device described in the present embodiment may be implemented by software, and the software may be installed on the server to distribute it by software download. It is also possible to distribute the software by storing it in a recording medium such as a CD-ROM. The aforementioned devices can be implemented by software in the other embodiments, too.

A program example in a case where the behavior of the first electronic device is implemented by software will be described as follows. This is a program for making a computer execute the following steps: (1) a first information transmission step for transmitting information to the server device identified by the server identifier previously stored via the second electronic device; (2) a first information reception step for receiving returned information having a global IP address from the second electronic device; (3) an IP address acquisition step for acquiring the global IP address from the returned information received at the first information reception step; and (4) an IP address setting step for setting the IP address acquired at the IP address acquisition step.

### (Second Embodiment)

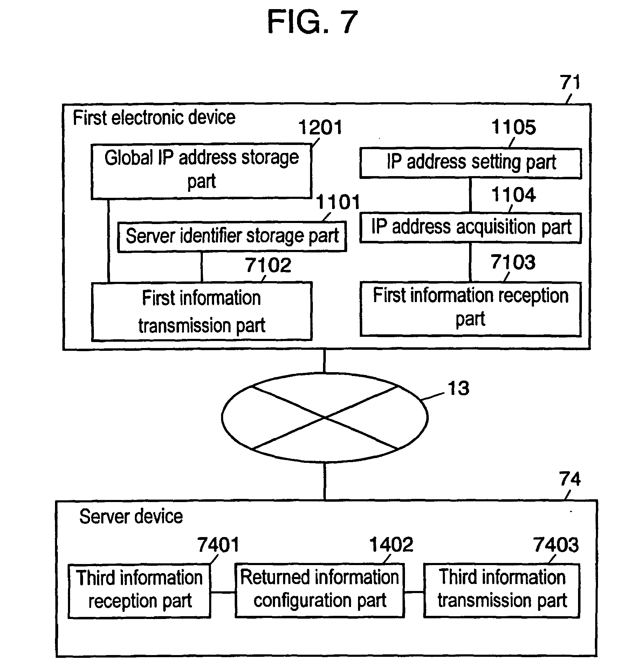

Fig. 7 is a block diagram of an information processing system according to a present embodiment. The information processing system includes first electronic device 71, internet 13 and server device 74. First electronic device 71 can be a computer, a microwave oven, a telephone, a printer, a facsimile, a refrigerator, a TV set, a set top box or the like.

First electronic device 71 includes global IP address storage part 1201, server identifier storage part 1101, first information transmission part 7102, first information reception part 7103, IP address acquisition part 1104 and IP address setting part 1105.

Server device 74 includes third information reception part 7401, returned information configuration part 1402 and third information transmission part 7403.

First information transmission part 7102 transmits information to server device 74 identified by a server identifier. First information transmission part 7102 can be implemented by a wireless or wire communication means.

First information reception part 7103 receives returned information having a global IP address from server device 74. First information reception part 7103 can be implemented by a wireless or wire communication means. In general, first information transmission part 7102 and first information reception part 7103 are physically the same.

Third information reception part 7401 receives information and a global IP address from first electronic device 71. Third information reception part 7401 can be implemented by a wireless or wire communication means.

Third information transmission part 7403 transmits returned information that returned information configuration part 1402 has configured to first electronic device 71. Third information transmission part 7403 can be implemented by a wireless or wire communication means. Third information reception part 7401 and third information transmission part 7403 are generally implemented by physically the same means.

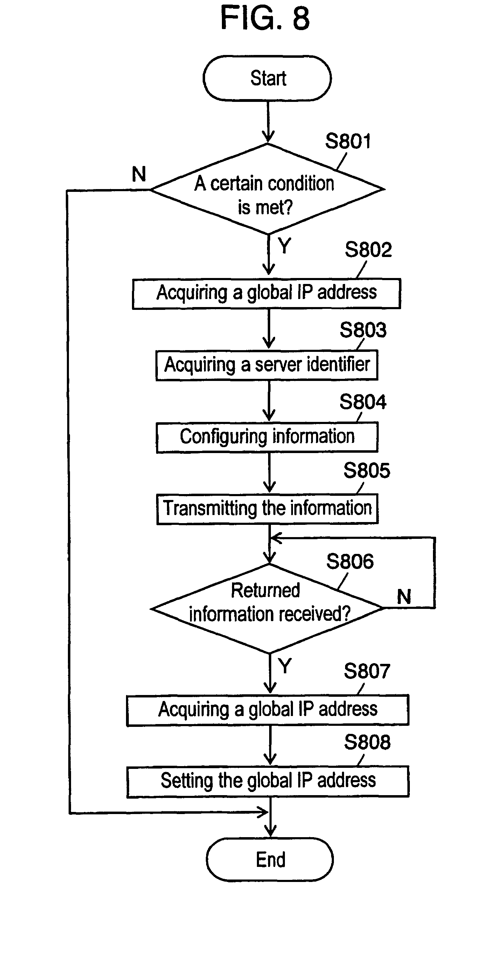

The following is a description of the behavior of this information processing system. First of all, the behavior of first electronic device 71 will be described using the flowchart shown in Fig. 8.

(Step S801) First information transmission part 7102 determines whether a condition to transmit information to server device 74 is met or not in order to set a global address. The condition can be various kinds, which will be described in detail later.

(Step S802) First information transmission part 7102 acquires a global IP address from global IP address storage part 1201.

(Step S803) First information transmission part 7102 acquires a server identifier from server identifier storage part 1101.

(Step S804) First information transmission part 7102 configures information having the global IP address acquired at Step S802 and the server identifier acquired at Step S803. This is information to be transmitted to server device 74. As an example of the configuration of the information to be transmitted, the global IP address is stored in the field (e.g. the "SA" in the first embodiment) for identifying the source device, and the server identifier is stored in the field (e.g. the "DA" in the first embodiment) for identifying the destination device. The main part of the information (e.g. the "Data" in the first embodiment) can be empty. The configuration of the information to be transmitted does not matter.

(Step S805) First information transmission part 7102 transmits the information configured at Step S804 to server device 74.

(Step S806) First information reception part 7103 determines whether returned information has been received or not. When returned information has been received, the process goes to Step S807; otherwise, it goes back to Step S806.

(Step S807) IP address acquisition part 1104 takes out a global IP address from the returned information received at Step S806.

(Step S808) IP address setting part 1105 sets the global IP address acquired at Step S807.

The global IP address set in the flowchart shown in Fig. 8 is generally used by software different from the software implementing the flowchart of Fig. 8.

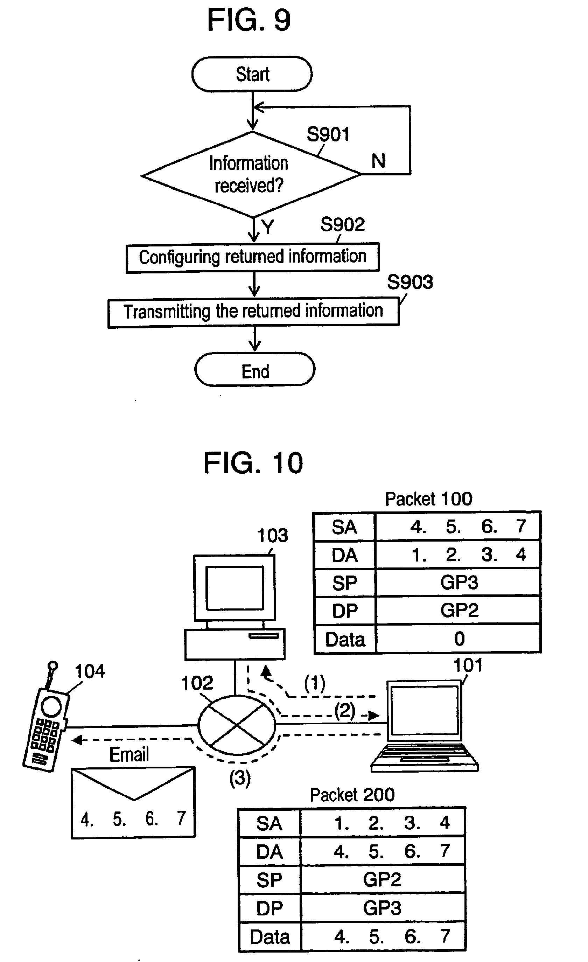

The following is a description of the behavior of server device 74 with reference to the flowchart shown in Fig. 9.

(Step S901) Third information reception part 7401 determines whether information has been received from first electronic device 71 or not. When information has been received, the process goes to Step S902; otherwise it goes back to Step S901.

(Step S902) Returned information configuration part 1402 configures returned information, which is information to be returned based on the information received at Step S901. In general, the global IP address contained in the header (route information) of the information is taken out and written in the returned information in a format (which is generally the main part of the returned information, and is the field corresponding to the "Data" in the aforementioned example) that first electronic device 71 can acquire. As long as first electronic device 71 can acquire the global IP address, the configuration of the returned information does not matter. Therefore, it causes no problem if the information received at Step S901 and the returned information are the same.

(Step S903) Third information transmission part 7403 transmits the returned information configured at Step S902 to first electronic device 71.

The following is a description about the specific behavior of the information processing system according to the present embodiment.

### (Fourth Example)

Fig. 10 shows the structure of the information processing system of a fourth example, and the configuration of information to be transmitted or received. The information processing system shown in Fig. 10 includes first electronic device 101, internet 102, server device 103 and portable terminal 104. First electronic device 101 has a first global IP address and a second global IP address. The first global IP address is a destination global IP address, and the second global IP address is a source global IP address. The first global IP address is a global IP address used for the communication between first electronic device 101 and an external device (server device 103 or the like). The second global IP address is a global IP address used for first electronic device 101 to inform its global IP address to an external device (e.g. portable terminal 104). The first global IP address and the second global IP address may not be consistent with each other. Specifically, the first global IP address is assigned dynamically from, e.g. an external device. The second global IP address is acquired in the following procedure. Therefore, when a new first global IP address is dynamically assigned from the external device, the first global IP address may be different from the second global IP address.

Assume that a first global IP address newly assigned is "4.5.6.7", and that first electronic device 101 stores "202.224.132.126" as the second global IP address of the source device. The second global IP address is the previous global IP address of first electronic device 101. The global IP address assigned to server device 103 is "1.2.3.4". First electronic device 101 also has the global IP address of server device 103, and periodically transmits the information of, e.g. packet 100 to server device 103. The contents of the information of packet 100 are as follows: the source global IP address ("SA") is "4.5.6.7", the destination global IP address ("DA") is "1.2.3.4", and the port of the destination device (server device 103) is "GP2". The "Data" of packet 100 is empty "0".

Then, server device 103 receives packet 100, and then configures packet 200 to be transmitted to first electronic device 101. Server device 103 acquires "4.5.6.7" as the "SA" of packet 100, and writes it in the field "Data" of packet 200. Then, server device 103 makes the "SA" of packet 100 the "DA" of packet 200, and further makes the "DA" of packet 100 the "SA" of packet 200. Thus, server device 103 configures packet 200, and then transmits it to first electronic device 101.

Receiving packet 200, first electronic device 101 acquires the global IP address in the "Data" of packet 200. First electronic device 101 then compares between the second global address "202.224.132.126" stored and the global IP address "4.5.6.7" in the "Data" of packet 200. When these addresses are different from each other, first electronic device 101 rewrites the second global IP address. At this moment, first electronic device 101 rewrites the second global IP address to "4.5.6.7".

When the second global IP address has changed, first electronic device 101 notifies the new second global IP address to a predetermined electronic device (portable terminal) 104. The notifying means can be anything that can notify the address. The notifying means is, e.g. email. In the fourth example, first electronic device 101 notifies the new second global IP address "4.5.6.7" to portable terminal 104 by email.

Then, portable terminal 104 acquires and stores the new global IP address "4.5.6.7" of first electronic device 101. Hereafter, the new global IP address "4.5.6.7" is used to access first electronic device 101 from portable terminal 104.

As described hereinbefore, in the fourth example, first electronic device 101 can always notify a new global IP address to an other device (portable terminal) 104. And the other device (portable terminal) 104 can access first electronic device 101 any time. The purpose for accessing first electronic device 101 from an other device is to control first electronic device 101 from the other device on the road or to acquire the state of first electronic device 101 from the other device on the road.

In the fourth example, the timing for the first electronic device to start the operation of setting the global IP address is given periodically; however, it is not limited to be periodical. For example, the timing can be when a certain condition has been met. The certain condition, as mentioned in the first embodiment, can be when first electronic device gets turned on or when first electronic device becomes unable to communicate.

Although in the fourth example, the first electronic device transmits information to the server device directly, a second electronic device can be provided between the first electronic device and the server device.

### (Fifth Example)

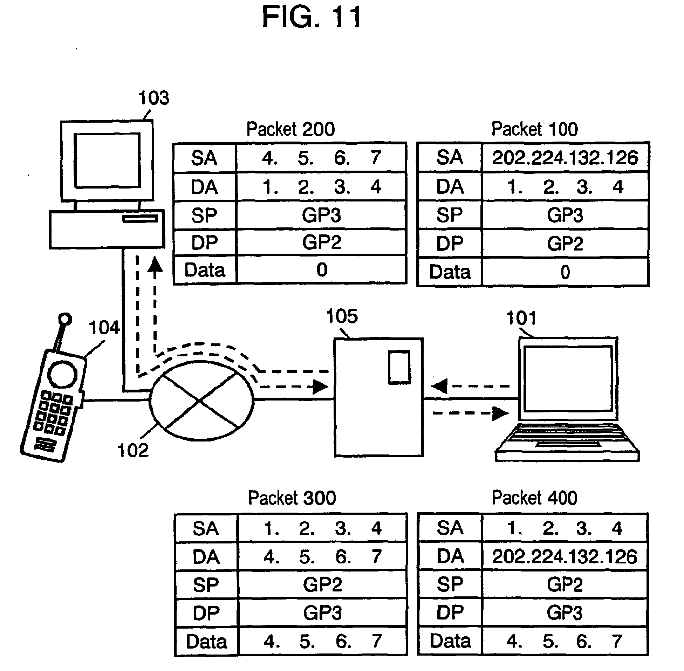

Fig. 11 shows the structure of the information processing system of a fifth example and information to be transmitted and received in the system. The information processing system includes first electronic device 101, internet 102, server device 103, portable terminal 104 and second electronic device 105. Second electronic device 105 is assigned a global IP address "4.5.6.7". First electronic device 101 transmits the information of packet 100 to second electronic device 105. The "SA" of packet 100 is the global IP address of first electronic device 101. The "DA" of packet 100 is the global IP address of server device 103. The "Data" of packet 100 is empty "0". Second electronic device 105 receives packet 100, and then configures packet 200 by rewriting the "SA" of packet 100 into the global IP address of its own. Then, second electronic device 105 transmits packet 200 to server device 103.

Receiving packet 200, server device 103 interchanges the "SA" and "DA" of packet 200, and stores the global IP address "4.5.6.7" of second electronic field 105 in the field "Data". Thus, server device 103 configures packet 300, and then transmits it to second electronic device 105. Receiving packet 300, second electronic device 105 rewrites the "DA" of packet 300 into the global IP address of first electronic device 101 so as to configure packet 400, and then transmits packet 400 to first electronic device 101. Receiving packet 400, first electronic device 101 acquires the global IP address "4.5.6.7" from the "Data" of packet 400, and stores it in an appropriate site (registry or the like). Thus, first electronic device 101 sets the global IP address "4.5.6.7". The description hereinbefore has been directed to the condition in which the second electronic device is provided between the first electronic device and the server device.

### (Sixth Example)

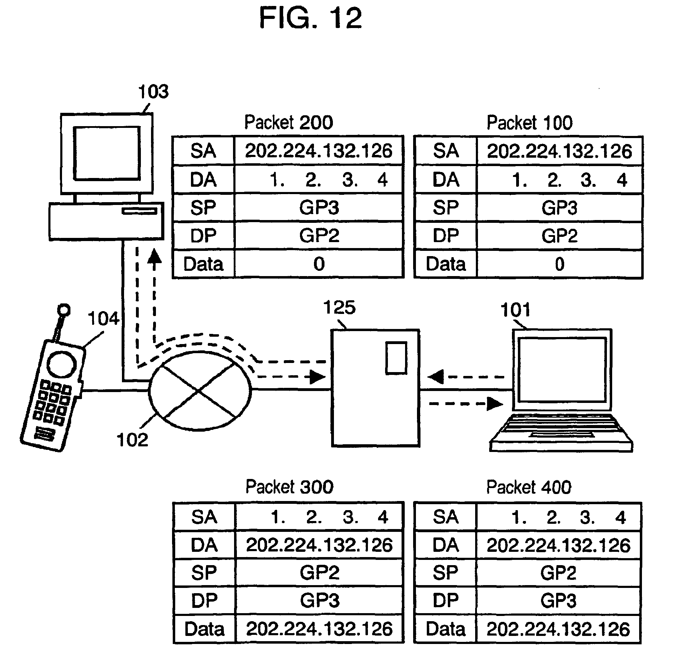

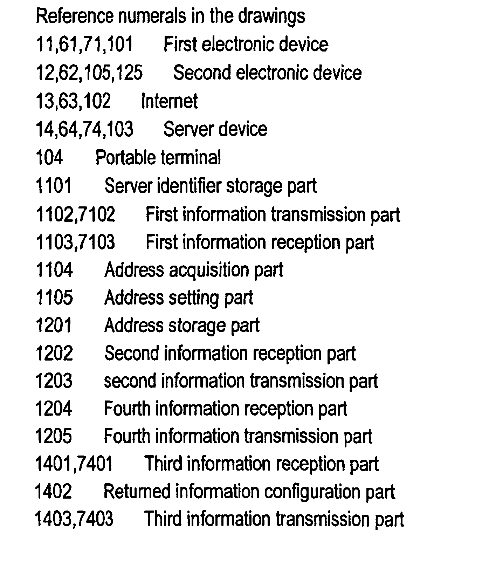

Fig. 12 shows the structure of the information processing system of a sixth example. The information processing system is identical to that shown in Fig. 11 in structure, but is different in information (packet) to be transmitted and received. In the information processing system shown in Fig. 12, second electronic device 125 just forwards packets without making any change. In short, packet 100 and packet 200 are identical to each other. Similarly, packet 300 and packet 400 are identical to each other. In the information processing system in the sixth example, the first electronic device can store the global IP address of its own in an appropriate site (also called registry, property or attribute).

As described hereinbefore, according to the second embodiment, the first electronic device can automatically know the global IP address of its own, and can automatically notify the global IP address of its own to an external device such as a portable terminal. In addition, it gets easier to access the first electronic device from an external device via the Internet. Consequently, the user can save work, and perform normal communication. The technique in the second embodiment is effective particularly when the internet protocol is updated to IPv6. This is because in IPv6 the IP address is as long as 128 bits, making it difficult to set it manually.

Also in the second embodiment, first electronic device 101 acquires the second global IP address by transmitting information to server device 103, although it has the first global IP address inside. The reason is as follows. The first software present in first electronic device 101 may not know the site where the first global IP address is stored. Furthermore, the site where the first global IP address is stored may differ depending on the type of the electronic device and other conditions, without being standardized. Assume that the first software is downloaded software and needs to know the global IP address. In that case, if the first electronic device has acquired and set the second global IP address in accordance with the aforementioned procedure, the global IP address of the first electronic device can be used by software downloaded from outside or the like. The second software, for which the first electronic device acquires and sets the second global IP address, knows the site where the first global IP address is stored.

In the second embodiment, the server device configures and transmits returned information; however, the server device can use received information as the returned information, without adding any change. All that is needed is that the first electronic device receiving the returned information is informed of the site where the global IP address in the returned information is stored. In that case, the server device does no have the retuned information configuration part, and only includes the third information reception part for receiving the information and global IP address from the first electronic device, and the third information transmission part for transmitting to the first electronic device returned information having the global IP address that the third information reception part has received.

The behavior of the first electronic device, the second electronic device and the server device described in the present embodiment may be implemented by software, and the software may be put on the server to distribute it by software download. It is also possible to distribute the software by storing it in a recording medium such as a CD-ROM.

### INDUSTRIAL APPLICABILITY

As described hereinbefore, the present invention enables the global IP address of an electronic device to be set automatically, thereby allowing the user to save work and perform normal communication.

## Claims

1. An information processing system comprising a server device and an electronic device, wherein
the electronic device includes:
a server identifier storage part which stores a server identifier for identifying the server device;
a global IP address storage part which stores a global IP address;
a first information transmission part which transmits information having the global IP address stored in the global IP address storage part to the server device identified by the server identifier;
a first information reception part which receives returned information having a global IP address from the server device;
an IP address acquisition part which acquires the global IP address from the returned information that the first information reception part has received; and
an IP address setting part which sets the global IP address that the IP address acquisition part has acquired, and
the server device includes:
a third information reception part which receives the information having the global IP address from the electronic device; and
a third information transmission part which transmits the returned information having the global IP address that the third information reception part has received to the electronic device.

2. The information processing system according to claim 1, wherein
the electronic device is composed of a first electronic device and a second electronic device,
the first electronic device comprises:
the server identifier storage part;
the first information transmission part which transmits the information to the server device identified by the server identifier via the second electronic device;
the first information reception part which receives the returned information having the global IP address from the second electronic device;
the IP address acquisition part; and
the IP address setting part,
the second electronic device comprises:
the global IP address storage part which stores a global IP address;
a second information reception part which receives the information from the first electronic device;
a second information transmission part which transmits the information that the second information reception part has received and the global IP address to the server device;
a fourth information reception part which receives the returned information having a global IP address from the server device; and
a fourth information transmission part which transmits the returned information that the fourth information reception part has received to the first electronic device, and
the server device comprises:
the third information reception part which receives the information and the global IP address from the second electronic device; and
the third information transmission part which transmits the returned information having the global IP address that the third information reception part has received to the second electronic device.

3. The information processing system according to claim 1, wherein
the electronic device further comprises:
a second global IP address storage part which stores a second global IP address; and
a global IP address notification part which notifies the global IP address to a predetermined external device when the global IP address that the IP address acquisition part has acquired and the second global IP address are different from each other,
the first information transmission part transmits the information periodically, and
the IP address setting part records the global IP address that the IP address acquisition part has acquired to the second global IP address storage part when the global IP address that the IP address acquisition part has acquired and the second global IP address are different from each other.

4. The information processing system according to claim 2, wherein
the first electronic devices further comprises:
a second global IP address storage part which stores the second global IP address; and
a global IP address notification part which notifies the global IP address to a predetermined external device when the global IP address that the IP address acquisition part has acquired and the second global IP address are different from each other,
the first information transmission part transmits the information periodically, and
the IP address setting part records the global IP address that the IP address acquisition part has acquired to the second global IP address storage part when the global IP address that the IP address acquisition part has acquired and the second global IP address are different from each other.

5. The information processing system according to claim 1 or 2, wherein
the first information transmission part transmits the information when a certain condition is met.

6. The information processing system according to claim 5, wherein
the certain condition is related to a state of communication.

7. The information processing system according to claim 6, wherein
the condition related to the state of communication indicates that the first electronic device becomes unable to communicate.

8. The information processing system according to claim 5, wherein
the certain condition indicates that the first electronic device gets turned on.

9. An electronic device for use in an information processing system, which automatically sets a global IP address of the electronic device, and which comprises a server device and the electronic device, the electronic device comprising:
a server identifier storage part which stores a server identifier for identifying the server device;
a global IP address storage part which stores the global IP address;
a first information transmission part which transmits information having the global IP address stored in the global IP address storage part to the server device identified by the server identifier;
a first information reception part which receives returned information having the global IP address from the server device;
an IP address acquisition part which acquires the global IP address from the returned information that the first information reception part has received; and
an IP address setting part which sets the global IP address that the IP address acquisition part has acquired.

10. The electronic device according to claim 9 further comprising:
a second global IP address storage part which stores a second global IP address; and
a global IP address notification part which notifies the global IP address to a predetermined external device when the global IP address that the IP address acquisition part has acquired and the second global IP address are different from each other,
the first information transmission part transmits the information periodically, and
the IP address setting part records the global IP address that the IP address acquisition part has acquired to the second global IP address storage part when the global IP address that the IP address acquisition part has acquired and the second global IP address are different from each other.

11. The electronic device according to claim 9, wherein
the electronic device is composed of a first electronic device and a second electronic device,
the first electronic device comprises:
the server identifier storage part;
the first information transmission part which transmits the information to the server device identified by the server identifier via the second electronic device;
the first information reception part which receives returned information having the global IP address from the second electronic device;
the IP address acquisition part; and
the IP address setting part, and
the second electronic device comprises:
the global IP address storage part which stores the global IP address;
a second information reception part which receives the information from the first electronic device;
a second information transmission part which transmits the information that the second information reception part has received and the global IP address to the server device;
a fourth information reception part which receives the returned information having the global IP address from the server device; and
a fourth information transmission part which transmits the returned information that the fourth information reception part has received to the first electronic device.

12. The electronic device according to claim 11, wherein
the first electronic device further comprises:
a second global IP address storage part which stores a second global IP address; and
a global IP address notification part which notifies the global IP address to a predetermined external device when the global IP address that the IP address acquisition part has acquired and the second global IP address are different from each other,
the first information transmission part transmits the information periodically, and
the IP address setting part records the global IP address that the IP address acquisition part has acquired to the second global IP address storage part when the global IP address that the IP address acquisition part has acquired and the second global IP address are different from each other.

13. A server device for use in an information processing system, which comprises the server device and an electronic device, and which automatically sets a global IP address of the electronic device, the server device comprising:
an information reception part which receives information having the global IP address from the electronic device; and
an information transmission part which transmits returned information having the global IP address that the information reception part has received to the electronic device.

14. A program to be executed by a computer in an information processing system, which comprises a server device and an electronic device, and which automatically sets a global IP address of the electronic device, the program comprising:
a first information transmission step for transmitting information having the global IP address previously stored in the electronic device to the server device identified by a server identifier previously stored;
a first information reception step for receiving returned information having the global IP address from the server device;
an IP address acquisition step for acquiring the global IP address from the returned information received at the first information reception step; and
an IP address setting step for setting the global IP address acquired at the IP address acquisition step.

15. A program to be executed by a computer in an information processing system, which comprises a first electronic device, a second electronic device and a server device, and which can automatically set a global IP address of the first electronic device, the program comprising:
a first information transmission step for transmitting information to the server device identified by a server identifier previously stored via the second electronic device,
a first information reception step for receiving returned information having the global IP address from the second electronic device;
an IP address acquisition step for acquiring the global IP address from the returned information received at the first information reception step; and
an IP address setting step for setting the global IP address acquired at the IP address acquisition step.

16. The program according to claim 14 or 15 further comprising:
a global IP address notification step for notifying the global IP address to a predetermined external device when the global IP address acquired at the IP address acquisition step and a second global IP address previously stored are different from each other;
at the first information transmission step, the information is transmitted periodically, and
at the IP address setting step, the global IP address acquired at the IP address acquisition step is stored as the second global IP address when the global IP address acquired at the IP address acquisition step and the second global IP address are different from each other.
